# EUROPÄISCHE PATENTSCHRIFT

(11) **EP 2 369 943 B1**
(45) Veröffentlichungstag und Bekanntmachung des Hinweises auf die Patenterteilung: **05.04.2017**
(21) Anmeldenummer: 09771748.2
(22) Anmeldetag: 14.12.2009
(51) Int. Cl.: A23G 1/20, A23G 3/02

(54) **VERBINDUNGSSTÜCK**
CONNECTING PIECE
PIÈCE DE LIAISON

(30) Priorität: 12.12.2008 DE 102008055518
(43) Veröffentlichungstag der Anmeldung: 05.10.2011
(73) Patentinhaber: Bühler AG, 9240 Uzwil (CH)
(72) Erfinder: BODEN, Hannjo, 32756 Detmold (DE); BAUER, Bernhard, 9242 Oberuzwil (CH)
(74) Vertreter: Nieswand, Martina
(86) Internationale Anmeldenummer: PCT/EP2009/067116
(87) Internationale Veröffentlichungsnummer: WO 2010/066910

(56) Entgegenhaltungen:
- DE-A1- 1 965 091
- DE-B- 1 123 545
- DE-U1- 29 905 283
- GB-A- 247 063
- US-A- 4 168 727
- US-A1- 2007 000 943

## Beschreibung

Die Erfindung betrifft eine Giessmaschine mit einem Verbindungsstück zum Befestigen der Düse.

Das Dokument DE 34 10 302 C2 zeigt die in einer Düsenplatte einer Giessmaschine befestigen Düsen. Die Düsen bestehen aus einem unelastischem Material, z.B. Stahl, und sind zerspanend hergestellt. Die Düsen werden in die Düsenplatte gepresst oder mit ihr verschweisst. Die montierten Düsen sind dann nur bedingt und mit grossem Aufwand austauschbar.

Aus DE 1123545 ist eine Dosiervorrichtung für Schokoladenmasse bekannt, wobei eine Düse über ein biegsames Zwischenstück mit der Austrittsöffnung der Giessmaschine verbunden ist, welche durch einen Vibrator in Schwingungen versetzt werden kann.

Die US Druckschrift US 4168727 zeigt eine mobile Schlagsahnemaschine mit einer Ausgabedüse, die mittels einer Tülle an einem Ausgaberohr befestigt ist. Die Düse wird mit einer Überwurfmutter und einer Riemenscheibe an die Tülle gepresst, die ihrerseits über eine Mutter an dem Ausgaberohr befestigt ist.

Die Druckschrift DE 299 05 283 zeigt ein Gerät zum Portionieren pastöser, schwer dosierbarer Stoffe. Zum Dosieren ist ein Kolben vorgesehen, der über ein Einwegventil mit dem Auslass eines Massebehälters verbunden ist und dessen Kolbenstange als Rohr ausgebildet ist. Eine Düse ist mittels eines Überwurfs an dem Rohr befestigt.

Die Druckschrift US2007/0000943 offenbart einen Spender für Zuckerguss. Der Spender umfasst ein Trichterstück, das an einen Behälter geschraubt wird. Eine Spendedüse wird mit einem Verschlussring an dem Trichterstück befestigt.

Der vorliegenden Erfindung liegt die Aufgabe zugrunde, eine elastische Düse mit konstruktiv einfachen Mitteln in einer Giessmaschine, anordnen bzw. befestigen zu können und gleichzeitig einen schnellen Austausch der Düse in der Vorrichtung-mit einfachen Montageschritten zu ermöglichen.

Diese Aufgabe wird erfindungsgemäss gelöst mit einer Giessmaschine mit den Merkmalen des Anspruchs 1.

Das Verbindungsstück ist in einer Düsenplatte einer Giessmaschine angeordnet, insbesondere anschraubbar. Die Giessmaschine kann z.B. Flüssigkeiten und insbesondere eine Schokoladenmasse vergiessen. Das Verbindungsstück hat bevorzugterweise eine Hohlzylinderform, damit die Flüssigkeit durch das Verbindungsstück in die Düse und von dort auf einen Giesspunkt gelangen kann. Ein erstes Ende des Verbindungsstücks hat eine Befestigungsvorrichtung, in Form eines Gewindes. Dieses Gewinde wird in die Düsenplatte eingeschraubt, so dass das Verbindungsstück fest mit der Düsenplatte verbunden ist. Bevorzugt noch vor der Montage das Verbindungsstücks in der Düsenplatte wird die Düse im Verbindungsstück angeordnet. Damit die Düse sicher im Verbindungsstück gehalten wird, ist eine Klemmeinheit vorgesehen, die mit dem zweiten Ende des Verbindungsstücks verbindbar ist. Das Verbindungsstück und/oder die Klemmeinheit können eine Aufnahme für die Düse aufweisen, sodass die Düse mit dem Verbindungsstück verbunden werden kann. Dann wird die Düse mit Hilfe des Verbindungsstücks in der Düsenplatte montiert. Eine defekte elastische Düse kann einfach ausgetauscht werden, indem die mit dem Verbindungsstück verbundene Düse aus der Düsenplatte entfernt und durch ein Verbindungsstück, welches eine neue Düse aufweist, ersetzt wird.

Das Verbindungsstück und die Klemmeinheit sind konstruktiv einfache Bauteile, die kostengünstig z.B. auf einem Drehautomaten oder als Spritzgussteil hergestellt werden können.

Vorteilhafterweise ist der Innendurchmesser des Verbindungsstücks kleiner als ein Aussendurchmesser der Düse, damit die Düse in Radialrichtung komprimiert wird. Dies beeinflusst die Giesseigenschaften der Düsen und ermöglicht ein sauberes Vergiessen der Masse mit einer Giessmaschine.

Günstig ist es, wenn ein Innenzylinder des Hohlzylinders einen konischen Bereich am Ende mit der Befestigungsvorrichtung des Verbindungsstücks aufweist, damit der Einlauf der zu vergiessenden Masse durch diese Trichterform in das Verbindungsstück und die Düse erfolgen kann.

Vorteilhafterweise weist das Verbindungsstück eine Fläche zur Aufnahme einer Flanschfläche der Düse auf, sodass die Düse bei der Montage an dieser Fläche anstösst und präzise fixiert werden kann.

Besondere Vorteile weist das erfindungsgemässe Verbindungsstück dann auf, wenn das Verbindungsstück eine Nut zur Aufnahme eines Flansches der Düse aufweist. Die Düse sitzt in der Nut und die Klemmeinheit kann für eine sichere Befestigung der Düse sorgen.

Denkbar ist es, dass eine Fläche des Verbindungsstücks, bevorzugt die äussere Fläche, mit der Düse verbindbar ist, um durch die zwischen der Düse und dem Verbindungsstück auftretende Klemmkraft die Düse im Verbindungsstück zu fixieren. Dies hat den Vorteil, dass bei einer ausreichend grossen Klemmkraft die zusätzliche Klemmeinheit entfallen kann.

In einer besonders vorteilhaften Ausführungsform der Erfindung kann die Aussenfläche des Verbindungsstücks eine Montagevorrichtung, insbesondere eine Schlüsselweite oder ein Rändel, aufweisen. Mit dieser Montagevorrichtung wird die Befestigung des Verbindungsstücks, insbesondere in einer Düsenplatte einer Giessmaschine, erleichtert, da die Schlüsselweite oder ein Rändel eine optimale Angriffsfläche für ein Montagewerkzeug darstellt oder einen Einschraubvorgang des Verbindungsstücks von Hand ermöglicht.

Besonders günstig ist es, wenn die Düse im Verbindungsstück vertieft angeordnet ist, damit die Düse sicher im Verbindungsstück befestigt werden kann. Des Weiteren kann das Verbindungsstück die Düse an einer Innenfläche des Verbindungsstücks stützen und den Einsatz der Düse in einer Giessmaschine unterstützen.

Vorteilhafterweise kann das Verbindungsstück an beiden Enden eine Befestigungsvorrichtung, insbesondere Gewinde, aufweisen, sodass das Verbindungsstück in einer Vorrichtung einer Giessmaschine befestigt werden kann und des Weiteren die Düse mit einer Vorrichtung am Verbindungsstück befestigt werden kann, welches beispielsweise wie eine Überwurfmutter ausgebildet sein kann.

Besonders günstig ist es, wenn das Verbindungsstück aus Metall, insbesondere einem nichtrostenden Stahl oder Edelstahl, oder aus Aluminium oder aus Kunststoff, insbesondere POM 6, besteht, da diese Materialien lebensmittelecht sind.

Bei einer vorteilhaften Ausführungsform der Erfindung kann das Verbindungsstück mit der Düse und/oder der Klemmeinheit verbindbar, insbesondere verschweissbar, sein, um die Befestigung der Düse zu verbessern und die Bereitstellung des Ersatzteiles kundenfreundlicher auszuführen.

Denkbar ist es, dass eine Hülse im Verbindungsstück anordbar ist, um dadurch die Stabilität des Verbindungsstücks zu verbessern.

In einer weiteren Ausführungsform der Erfindung kann wenigstens ein Sicherungselement senkrecht zur Mittelachse im Verbindungsstück und der Klemmeinheit angeordnet sein, um somit eine besonders zuverlässige Verbindung der Teile zu ermöglichen. Diese Sicherungselemente können Stifte oder Splinte oder Gewindestifte mit einer Sicherung sein.

Die Klemmeinheit unterstützt die Befestigung der Düse an einem Verbindungsstück, wobei die Klemmeinheit bevorzugt ein konstruktiv besonders einfaches Element in Form eines Hohlzylinders ist. Eine Fläche der Klemmeinheit ist mit der Düse verbindbar. Die Klemmeinheit ermöglicht einen schnellen Austausch der Düse in der Vorrichtung, insbesondere in der Giessmaschine, mit einfachen Montageschritten, da nur die Klemmeinheit von der Düse und/oder dem Verbindungsstück gelöst werden muss, um die Düse auszutauschen.

Die Klemmeinheit und der Sitz der Klemmeinheit an dem Verbindungsstück können so ausgeführt sein, dass für einen Austausch der Düse die Düse und/oder die Klemmeinheit zu zerstören sind, also die Düse und/oder die Klemmeinheit nicht zerstörungsfrei entfernbar sind, und bei einem Austausch sowohl Düse als auch Klemmeinheit erneuert werden.

Alternativ kann die Klemmeinheit so ausgeführt sein, dass diese für einen Austausch der Düse mit einem dafür vorgesehenen Spezialwerkzeug zu entfernen und wieder zu applizieren ist. Die Klemmeinheit kann dafür beispielsweise Ausnehmungen aufweisen, die ein bestimmtes Profil besitzen und in welche ein entsprechendes Werkzeug eingeführt werden kann.

Der Tausch der Düse kann erfolgen, während das Verbindungsteil an der Giessmaschine verbleibt oder nachdem das Verbindungsteil von der Geissmaschine gelöst wurde.

Günstig ist es, wenn die Klemmeinheit die Düse im oder am Verbindungsstück befestigen kann, da die Düse hauptsächlich einer Kraft entlang der Mittelachse während des Einsatzes in einer Giessmaschine ausgesetzt ist und die Düse somit optimal in dem Verbindungsstück gesichert werden kann.

In einer vorteilhaften Ausführungsform ist die Klemmeinheit im Verbindungsstück angeordnet, sodass das Verbindungsstück ein geschlossenes Bauteil darstellt, bei dem nur die Düse über die Kanten des Verbindungsstücks hinausragen. Diese Ausführungsform bietet nicht nur für die Kraftaufnahme, sondern auch für die Säuberung des Verbindungsstücks erhebliche Vorteile.

In einer besonders vorteilhaften Ausführungsform der Erfindung kann die Aussenfläche der Klemmeinheit eine Montagevorrichtung, insbesondere ein Gewinde oder eine Schlüsselweite oder ein Rändel, aufweisen, wodurch die Montage der Klemmeinheit mit der Düse am Verbindungsstück beschleunigt werden kann.

Vorteilhafterweise besteht die Klemmeinheit aus Metall, insbesondere einem nichtrostenden Stahl oder Edelstahl oder aus Aluminium oder aus Kunststoff, insbesondere POM 6, da diese Materialien lebensmittelecht sind.

Weitere vorteilhafte Weiterbildungen der Erfindung sind in den Unteransprüchen definiert.

Einige Ausführungsbeispiele werden im Folgenden unter Hinweis auf die beigefügten Figuren näher beschrieben. Dabei zeigen:
- Fig. 1: einen Vertikalschnitt durch das Verbindungsstück, die Klemmeinheit und die Düse;
- Fig. 2: eine perspektivische Ansicht der in Fig. 1 gezeigten ersten Ausführungsform;
- Fig. 3: einen Vertikalschnitt durch eine zweite Ausführungsform des Verbindungsstücks, der Klemmeinheit und der Düse;
- Fig. 4: einen Vertikalschnitt durch eine dritte Ausführungsform des Verbindungsstücks, der Klemmeinheit und der Düse;
- Fig. 5: einen Vertikalschnitt durch eine vierte Ausführungsform des Verbindungsstücks, der Klemmeinheit und der Düse;
- Fig. 6: einen Vertikalschnitt durch eine fünfte Ausführungsform des Verbindungsstücks, der Klemmeinheit und der Düse;
- Fig. 7: einen Vertikalschnitt durch eine sechste Ausführungsform des Verbindungsstücks, der Klemmeinheit und der Düse in einer Giessmaschine;
- Fig. 8: einen Vertikalschnitt durch eine siebte Ausführungsform des Verbindungsstücks, der Klemmeinheit und der Düse in einer Giessmaschine;
- Fig. 9: einen Vertikalschnitt durch eine achte Ausführungsform eines Verbindungsstücks, einer Klemmeinheit, einer Düse und Sicherungselemente;
- Fig. 10: einen Vertikalschnitt durch eine neunte Ausführungsform des Verbindungsstücks, der Klemmeinheit und der Düse;

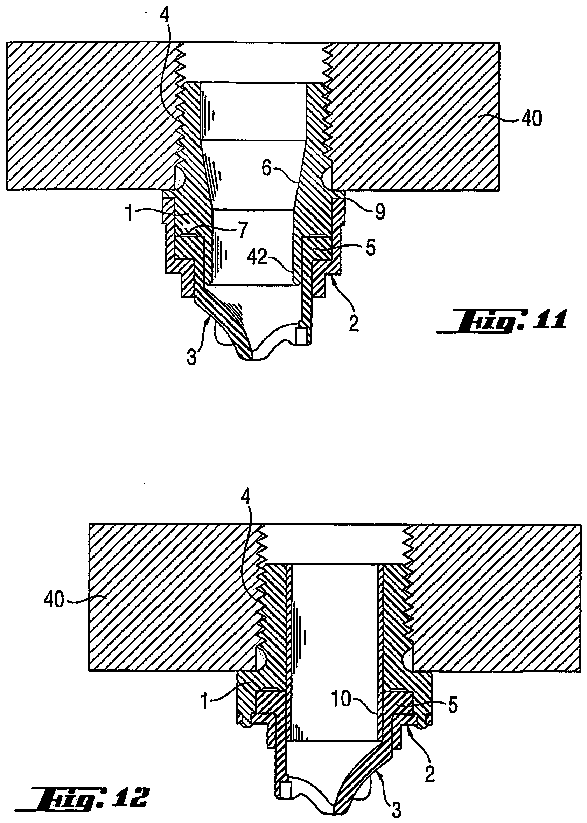

- Fig. 11: einen Vertikalschnitt durch eine zehnte Ausführungsform des Verbindungsstücks, der Klemmeinheit und der Düse in einer Giessmaschine;
- Fig. 12: einen Vertikalschnitt durch eine elfte Ausführungsform des Verbindungsstücks, der Klemmeinheit und der Düse in einer Giessmaschine;

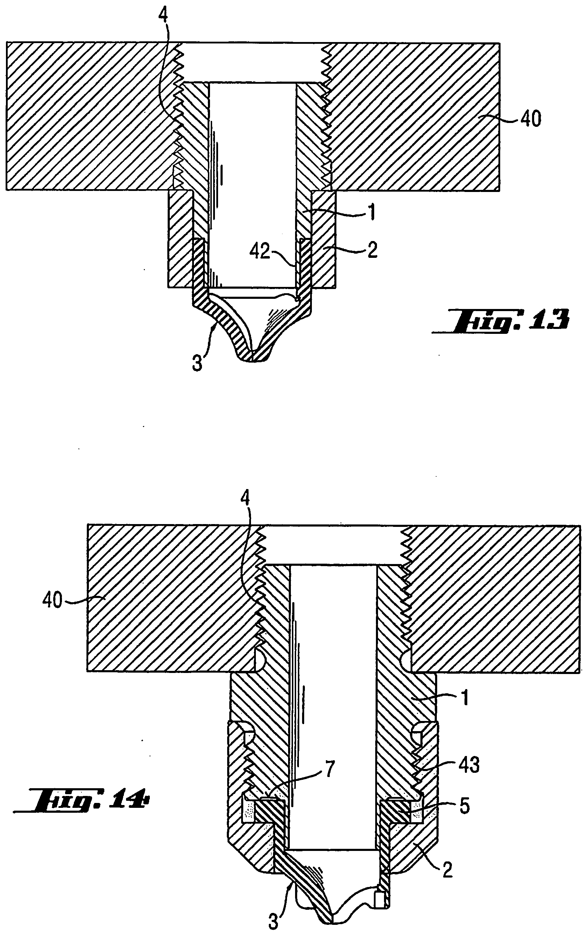

- Fig. 13: einen Vertikalschnitt durch eine zwölfte Ausführungsform des Verbindungsstücks, der Klemmeinheit und der Düse in einer Giessmaschine;
- Fig. 14: einen Vertikalschnitt durch eine dreizehnte Ausführungsform des Verbindungsstücks, der Klemmeinheit und der Düse in einer Giessmaschine und

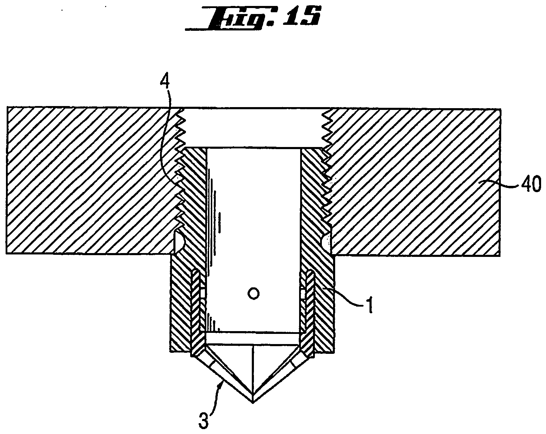

- Fig. 15: einen Vertikalschnitt durch eine vierzehnte Ausführungsform des Verbindungsstücks, der Klemmeinheit und der Düse in einer Giessmaschine.

Gleiche Komponenten werden in den Figuren durchgängig mit gleichen Bezugszeichen bezeichnet.

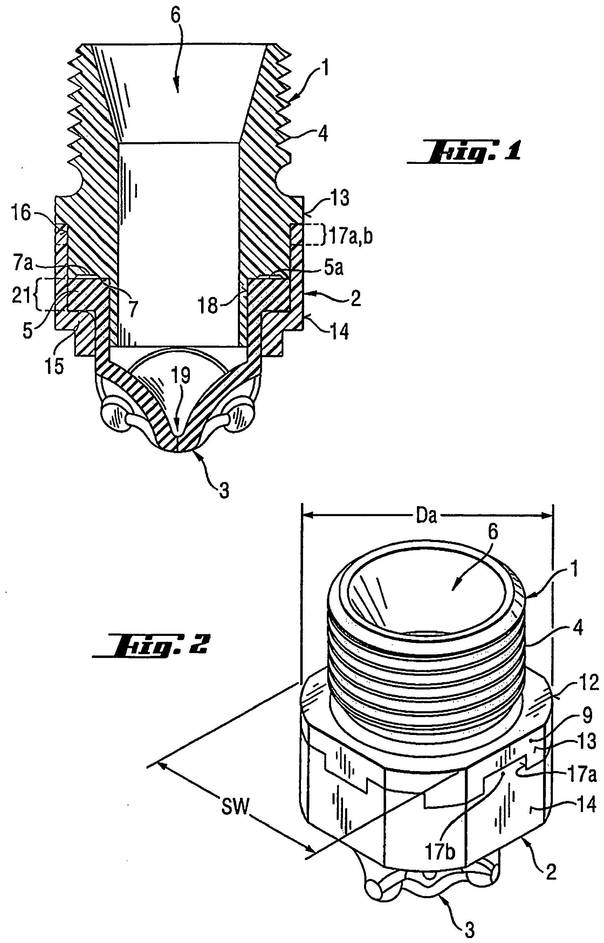

Die Figuren 1 und 2 zeigen eine erste Ausführungsform der vorliegenden Erfindung. Das Verbindungsstück 1 ist ein Hohlzylinder und besteht aus dem Kunststoffmaterial POM 6. Ein Bereich der radialen Aussenfläche des Hohlzylinders hat ein Gewinde 4 zur Befestigung des Verbindungsstücks 1 in einer Vorrichtung, d.h. in einer Düsenplatte einer Giessmaschine. An das Gewinde 4 grenzt ein zylindrischer Bereich 12, dessen Aussendurchmesser den maximalen Aussendurchmesser Da des Verbindungsstücks 1 darstellt. An diesem durch den maximalen Aussendurchmesser gebildeten Zylinder 12 sind vier Flächen 13 eingeformt, die eine Schlüsselweite SW für ein Montagewerkzeug darstellen. An den maximalen Aussendurchmesser grenzt ein zylindrischer Ansatz 16a an, dessen Aussendurchmesser kleiner als der maximale Aussendurchmesser Da ist. Ferner hat das Verbindungsstück 1 an dem gegenüberliegend zu dem Gewinde 4 angeordneten Ende eine kreisringförmige Fläche 7 zur Aufnahme einer Flanschfläche eines Flansches 5 der Düse 3. Die Hohlzylinderform des Verbindungsstücks 1 entsteht durch eine zylindrische Aussenform und eine koaxial angeordnete durchgängige Bohrung. An dem Verbindungsstückende mit dem Gewinde läuft die Bohrung konisch ein. Die dadurch entstehende Trichterform im Inneren des Verbindungsstücks 1 leitet eine zu vergiessende Masse durch das Verbindungsstück 1 in die Düse 3.

Des Weiteren ist eine Klemmeinheit 2 vorhanden, die ebenfalls aus einem Kunststoffmaterial, z.B. POM 6, besteht und mit dem Verbindungsstück 1 verbunden ist. Die beiden Bauteile 1,2 werden miteinander verschweisst, z.B. ultraschallgeschweisst oder lasergeschweisst. Der Aussendurchmesser der Klemmeinheit 2 entspricht dem maximalen Aussendurchmesser des Verbindungsstücks 1. Des Weiteren weist die Klemmeinheit 2 einen Absatz 15 auf, der geeignet ist, den Flansch 5 der Düse 3 gegen die Fläche 7 des Verbindungsstücks 1 zu drücken. Nach dem Verbinden der Bauteile 1,2 und 3 fixiert der Absatz 15 der Klemmeinheit 2 die Düse 3 axial.

Die äussere Mantelfläche der Klemmeinheit 2 hat Flächen 14, die mit der Schlüsselweite SW des Verbindungsstücks 1 und dessen Flächen 13 korrespondieren, sodass sich nach der Montage der Bauteile 1,2 und 3 gemeinsam vier Flächen 13,14 an den Aussendurchmessern des Verbindungsstücks 1 und der Klemmeinheit 2 bilden, an welche ein Montagewerkzeug zur Befestigung des Verbindungsstücks in einer Düsenplatte einer Giessmaschine angesetzt wird. Dabei weist das Verbindungsstück 1 im Bereich der Werkzeugangriffsfläche vier Nuten 17a auf, in welche vier korrespondierende Klauen 17b der Klemmeinheit 2 axial eingreifen und radial formschlüssig wirken, um das Drehmoment des Montagewerkzeugs in das Gewinde 4 des Verbindungsstücks 1 einzuleiten. Die Klemmeinheit 2 erstreckt sich axial über das Verbindungsstück 1 hinaus und stützt mit dem inneren Durchmesser die Düse 3.

Die Düse 3 besteht aus einem elastischen Material, z.B. NBR, und hat zwei Öffnungen. Eine Öffnung 18 ist von einem Flansch 5 umgeben. Die andere Öffnung 19 ist durch wenigstens drei elastische Düsenklappen verschlossen. Die Düse 3 wird wie folgt in einer Maschine, d.h. einer Giessmaschine, montiert. Der Flansch 5 der Düse 3 wird gegen die Kreisringfläche 7 des Verbindungsstücks 1 gedrückt und mit der Klemmeinheit 2 gegen das Verbindungsstück 1 gepresst. Der Flansch 5 der Düse 3 ist zwischen dem Verbindungsstück 1 und der Klemmeinheit 2 angeordnet und wird durch die Verbindung der Klemmeinheit 2 mit dem Verbindungsstück 1 zwischen den beiden Bauteilen fixiert. Dabei wird der Flansch 5 von einer Kammer 21 aufgenommen, welche innen und oben vom Verbindungsstück 1 sowie aussen und unten von der Klemmeinheit 2 gebildet wird.

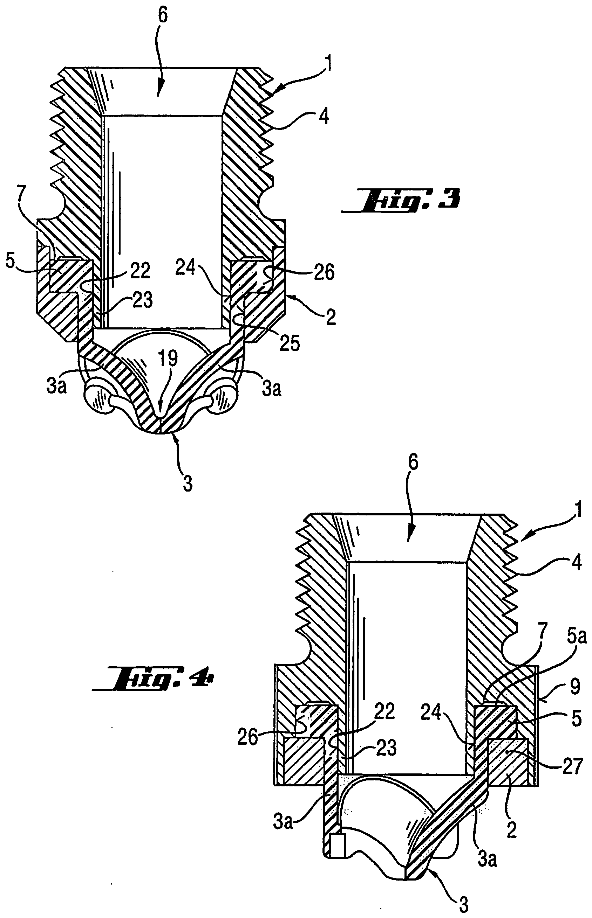

Figur 3 zeigt eine zweite Ausführungsform des erfindungsgemässen Verbindungsstücks 1, welches an einem radialen äusseren Ende, wie oben beschrieben, ein Gewinde 4 zur Befestigung des Verbindungsstücks 1 in einer Vorrichtung aufweist. Ferner weist das Verbindungsstück 1 eine koaxial angeordnete Bohrung mit einer konischen Senkung 6 auf. Die Senkung 6 ist an dem Verbindungsstückende angeordnet, welches das Gewinde 4 aufweist. Am gegenüberliegenden Ende des Verbindungsstücks 1 ist eine Fläche 7 ausbildet, gegen welche der Düsenflansch 5 der Düse 3 gepresst wird. An die Fläche 7 grenzt in axialer Richtung eine zylindrische Mantelfläche 22 eines am Verbindungsstück 1 angeordneten Führungsrohres 23 an, dessen Aussenfläche die Innenwandfläche der Düse 3 im montierten Zustand berührt und unterstützt.

Die Klemmeinheit 2 hat eine zylindrische Form mit einem Aussendurchmesser, welcher dem Aussendurchmesser des Verbindungsstücks 1 entspricht. Der Innendurchmesser der Klemmeinheit 2 ist kleiner als der Aussendurchmesser der Düse 3. Dadurch übt im montierten Zustand der Innendurchmesser der Klemmeinheit 2 einen Druck auf die Düsenklappen 3a aus und verschliesst die Öffnung 19 der Düse 3. Die Klemmeinheit 2 weist des Weiteren einen Absatz 26 in Form eines L's auf, der den zylindrischen Düsenflansch 5 aufnimmt.

Die Düse 3 wird gegen die Fläche 7 des Verbindungsstücks 1 gepresst und mit der Klemmeinheit 2 fixiert. Durch Schweissen werden die Bauteile miteinander verbunden. Dann wird das Verbindungsstück 1 mit der Befestigungsvorrichtung 4 in einer Vorrichtung, z.B. Düsenplatte, einer Giessmaschine befestigt, d.h. eingeschraubt. Das zu vergiessende Material fliesst zunächst durch die konische Öffnung 6 bzw. Senkung des Verbindungsstücks 1 und durch die Bohrung in die Düse 3. Die Düse weist Düsenklappen 3a auf, die sich durch den Druck der Masse geöffnet und vom Verbindungsstück 1 und/oder Klemmeinheit 2 während des geöffneten Zustandes begrenzt und stabilisiert werden.

Figur 4 zeigt eine dritte Ausführungsform, wobei das Verbindungsstück 1, wie oben beschrieben, eine konische Öffnung 6 mit einer angrenzenden Bohrung sowie ein Aussengewinde 4 aufweist. Der Aussendurchmesser des Verbindungsstücks 1 ist mit einer Schlüsselweite oder einem Rändel 9 versehen, so dass das Verbindungsstück 1 manuell montiert werden kann. Ferner weist das Verbindungsstück 1 eine Fläche 7 zur Aufnahme einer Düsenfläche 5a auf. Die Düse 3 wird gegen diese Fläche 7 gedrückt und mit einer Klemmeinheit 2 fixiert, die in einer Fläche 27 des Verbindungsstücks 1 eingebracht ist. Somit weist das Verbindungsstück 1 nicht nur eine Fläche 7 für die Aufnahme des Düsenflansches 5 auf, sondern auch eine zylindrische Fläche 27 für die Aufnahme der Klemmeinheit 2. Die montiete Klemmeinheit 2 ragt nicht über das Verbindungselement 1 hinaus, sondern schliesst bündig mit dem Verbindungsstück 1 ab. Das Verbindungsstück 1 und die Klemmeinheit 2 bestehen aus Metall, insbesondere einem nichtrostenden Stahl oder Edelstahl. Die Bauteile sind miteinander verschweisst oder verklebt.

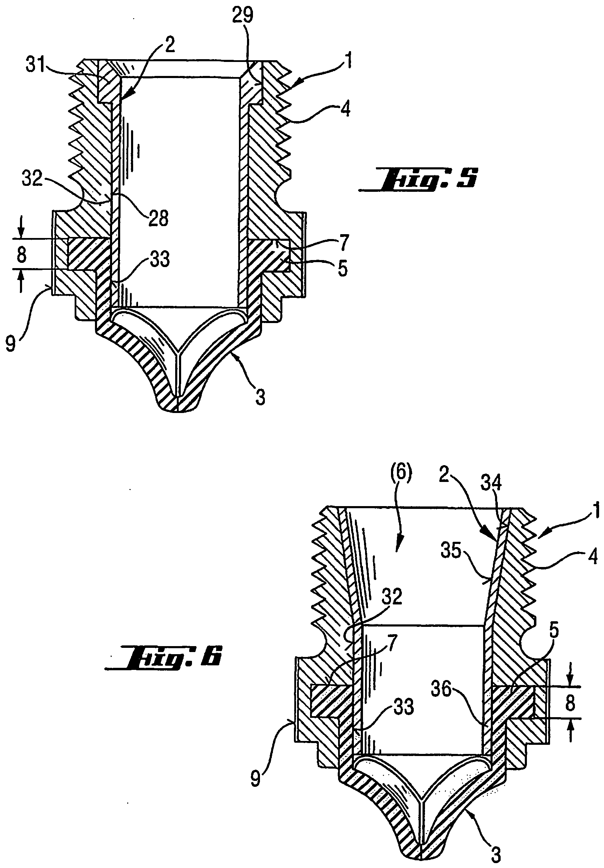

Figur 5 zeigt eine vierte Ausführungsform, wobei das Verbindungsstück 1 an einem Ende ein Aussengewinde 4 und eine an die Bohrung 28 anschliessende Flachsenkung 29 aufweist. Die Klemmeinheit 2 wird in den Innendurchmesser, d.h. die Bohrung 28, des Verbindungsstücks 1 eingeschoben. Die Klemmeinheit 2 weist einen Abschlussflansch 31 auf, der bündig in der Flachsenkung 29 des Verbindungsstücks 1 positioniert ist. Das Verbindungsstück 1 weist ferner eine Nut 8 auf, die an den Innendurchmesser der Bohrung 28 angrenzt. Die Düse 3 wird mit ihrem Flansch in dieser Nut 8 im Verbindungsstück 1 platziert, so dass die Düse 3 teilweise im Verbindungsstück 1 platziert ist.

Damit die Düse 3 in der Giessmaschine montiert werden kann, wird sie zunächst mit dem Flansch 5 in die Nut 8 des Verbindungsstücks 1 eingeführt und anschliessend wird die Klemmeinheit 2 in die Bohrung 28 des Verbindungsstücks 1 eingeschoben, bis der Abschlussflansch 31 der Klemmeinheit 2 in der Flachsenkung 29 des Verbindungsstücks 1 sitzt. Die Klemmeinheit 2 presst mit ihrer Aussenmantelfläche 32 gegen die Innenmantelfläche 33 der Düse 3 und verspannt diese mit dem Verbindungsstück 1. Zusätzlich ist das Verbindungsstück 1 mit der Klemmeinheit 2 verbunden, insbesondere verklebt oder verschweisst. Das hier aus Metall gebildete Verbindungsstück 1 weist im äusseren Durchmesserbereich ein Rändel 9 auf.

Figur 6 zeigt einen ähnlichen Aufbau wie die Figur 5. Das Verbindungsstück 1 weist jedoch im Bereich mit der Befestigungsvorrichtung 4 keine Flachsenkung sondern einen konischen Bereich 34 auf. Die Klemmeinheit 2 hat ebenfalls an einem Ende einen konischen Bereich 35. Nachdem die Düse 3 in der Nut 8 des Verbindungsstücks 1, wie bereits in Figur 5 beschrieben, eingesetzt wurde, wird die Klemmeinheit 2 in das Verbindungsstück 1 geschoben. Die beiden konischen Enden 34, 35 sind dann miteinander verspannt und die Klemmeinheit 2 drückt des Weiteren gegen die Düse 3 und verspannt diese mit dem Verbindungselement 1. Der konische Bereich 35 der Klemmeinheit 2 fördert den Zufluss der zu vergiessenden Masse in die Düse 3.

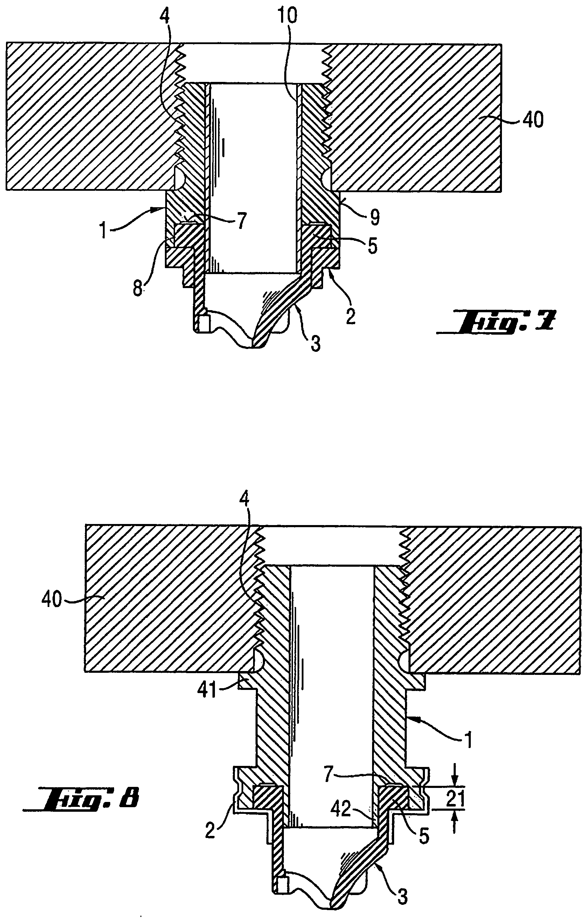

Figur 7 zeigt eine sechste Ausführungsform, wobei das Verbindungsstück 1 in einer Vorrichtung, insbesondere Düsenplatte 40 einer Giessmaschine, befestigt ist. Ein Ende des Verbindungsstücks 1 ist mit einer Eindrehung oder Flachsenkung ausgestattet, in welche der Flansch 5 einer Düse 3 angeordnet ist. Die Klemmeinheit 2 ist auf der Fläche des Verbindungsstücks 1 angeordnet und drückt gegen den Düsenflansch der Düse 3. Die Bauteile werden miteinander verbunden, insbesondere verschweisst. Eine Hülse 10 besteht aus einem Rohrmaterial und ist in das Verbindungsstück 1 soweit eingeschoben, bis die Hülse 10 bündig mit dem Verbindungsstück 1 abschliesst und die Düse 3 zumindest teilweise unterstützt. Die Hülse 10 baut einen radialen Druck auf die Düse 3 auf und verspannt die Düse 3 zusätzlich im Verbindungsstück 1. Die Hülse 10 besteht aus einem Material, welches die zu vergiessende Masse während der Einleitung in die Düse 3 günstig beeinflusst und z.B. Verwirbelungen und die Wärmeentwicklung vermindert.

Figur 8 zeigt eine siebte Ausführungsform, wobei das Verbindungsstück 1 einen Anschlagflansch 41 aufweist, welcher an eine Befestigungsvorrichtung 4, insbesondere Gewinde angrenzt. Das Gewinde 4 wird in die Vorrichtung, z.B. Düsenplatte 40, eingeschraubt, bis der Anschlag 41 gegen die Vorrichtung 40 stösst. Das Verbindungsstück 1 hat an einem gegenüberliegend zum Gewinde 4 angeordneten Ende eine Aufnahme 21 für einen Düsenflansch 5. Diese Aufnahme 21 ist eine Abdrehung des Verbindungsstücks 1, sodass an diesem Ende ein dünnwandiger Hohlzylinder 42 bestehen bleibt. Ein Düsenflansch einer Düse 3 wird über diesen dünnwandigen Hohlzylinder in die Aufnahme 21 des Verbindungsstücks 1 geschoben, wobei der Aussendurchmesser des Hohlzylinders gegen den Innendurchmesser der Düse 3 drückt und die Düse 3 stabilisiert bzw. klemmt. Eine Klemmeinheit 2 drückt gegen den Düsenflansch 5 und einen Teilbereich des Aussendurchmessers der Düse 3 und hält diese in der montierten Position.

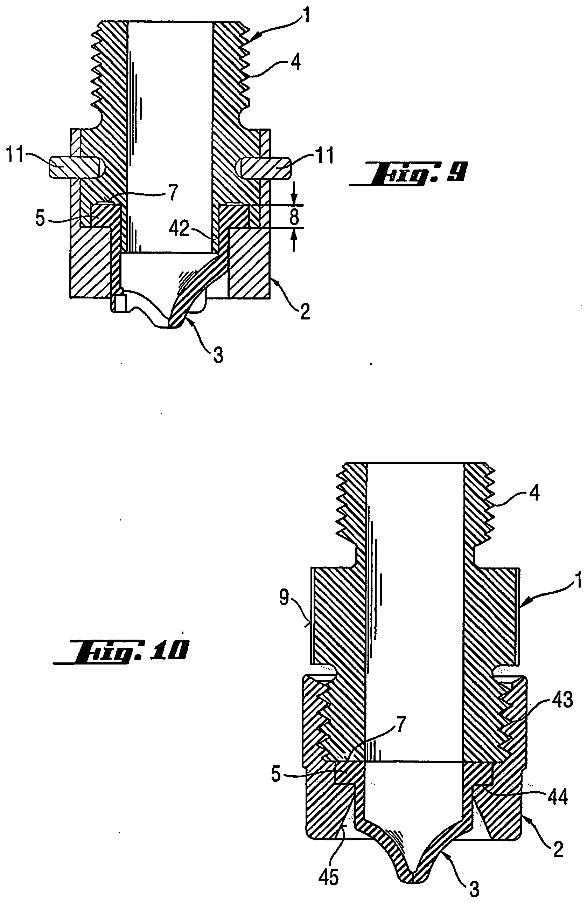

Figur 9 zeigt eine achte Ausführungsform. Das Verbindungsstück 1 hat ein Gewinde 4, welches in die Vorrichtung, insbesondere Giessmaschine, eingeschraubt wird. Das Verbindungsstück 1 weist eine Bohrung auf, die einen inneren Hohlzylinder bildet. Das zum Gewinde 4 gegenüberliegende Ende des Verbindungsstücks 1 weist einen Aussendurchmesser auf, der kleiner ist als der Aussendurchmesser des übrigen Verbindungsstücks 1, wobei der Innendurchmesser des Verbindungsstücks 1 mit dem Aussenbereich einen dünnwandigen Hohlzylinder 42 bildet. In die eingedrehte Fläche ist eine Nut 8 für die Aufnahme eines Düsenflanschs 5 eingedreht. Des Weiteren weist das Verbindungsstück 1 wenigstens zwei radial angeordnete Aufnahmen für Sicherungselemente 11 auf.

Die Klemmeinheit 2 besteht aus einem Hohlzylinder mit zwei unterschiedlichen Innendurchmessern. Ein Teilbereich der Klemmeinheit 2 weist einen Innendurchmesser auf, der an das Verbindungsstück 1 angepasst ist. Der daran angrenzende kleinere Innendurchmesser ist an den Durchmesser der Düse 3 angepasst. Um die Düse 3 in der Giessvorrichtung zu montieren, wird zunächst die Düse 3 in die Nut 8 des Verbindungsstücks 1 eingelegt. Die Klemmeinheit 2 wird über die Düse 3 und einen Bereich des Verbindungsstücks 1 geschoben, sodass ein Innenflansch der Klemmeinheit 2 gegen den Düsenflansch 5 drückt und diesen fixiert. Dann werden die Sicherungselemente 11 angebracht, die eine axiale Verschiebung der Klemmeinheit 2 gegen das Verbindungsstück 1 verhindern. Die Sicherungselemente 11 sind mit dem Verbindungsstück 1 fest verbunden, z.B. verklebt. Wenn die zu vergiessende Masse in das Verbindungsstück 1 eintritt und durch den Innenzylinder des Verbindungsstücks 1 in die Düse 3 gelangt, wird ein Druck auf die Düse 3 ausgeübt, der diese ohne Gegenmassnahmen vom Verbindungsstück 1 abkoppeln würde. Da der Flansch der Düse 3 von der Klemmeinheit 2 gegen die Nut 8 des Verbindungsstücks 1 gepresst und mit den Sicherungselementen 11 in dieser Position gehalten wird, kann der Druck der zu vergiessenden Masse die Düse 3 nicht von ihrer Position entfernen.

Figur 10 zeigt eine neunte Ausführungsform des erfindungsgemässen Verbindungsstücks 1. Ein Ende des Verbindungsstücks 1 weist ein Gewinde 4 zur Befestigung des Verbindungsstücks 1 in eine Düsenplatte einer Giessmaschine auf. An das Gewinde 4 grenzt ein zylindrischer Bereich, der eine Montagevorrichtung 9, insbesondere ein Rändel, aufweist. An diesen zylindrischen Bereich grenzt ein weiteres Gewinde 43 und erstreckt sich zum anderen Ende des Verbindungsstücks 1. Dieses Gewinde 43 des Verbindungsstücks 1 wird mit einem Gewinde 43 einer Klemmeinheit 2 verbunden.

Die Klemmeinheit 2 weist ein Innengewinde 43, eine Aufnahme 44 für einen Düsenflansch 5 sowie eine konische Austrittsöffnung 45 auf. Die Düse 3 wird in der Vorrichtung derart montiert, dass sie zunächst in die Klemmeinheit 2 eingefügt und mit der Klemmeinheit 2 am Verbindungsstück 1 befestigt wird. Durch die axiale Gewindebewegung der Klemmeinheit 2 auf dem Verbindungsstück 1 wird der Flansch 5 der Düse 3 gegen die Aufnahme 44 für den Düsenflansch 5 in der Klemmeinheit 2 gepresst und die Düse 3 sicher fixiert.

## Patentansprüche

1. Giessmaschine mit einem Verbindungsstück (1), insbesondere geeignet zur Befestigung einer elastischen Düse (3) in einer Giessmaschine, einer Klemmeinheit (2) und einer Düse (3),
wobei das Verbindungsstück (1), das bevorzugt eine Hohlzylinderform hat, an einem ersten Ende eine Befestigungsvorrichtung (4) in Form eines Gewinde aufweist, und die Klemmeinheit (2) mit dem zweiten Ende des Verbindungsstücks (1) verbindbar ist, wobei das Verbindungsstück (1) und/oder die Klemmeinheit (2) eine Aufnahme für die Düse (3) aufweist und die Düse (3) mit dem Verbindungsstück (1) verbindbar und in oder an dem Verbindungsstück haltbar ist.

2. Giessmaschine nach Anspruch 1, **dadurch gekennzeichnet, dass** ein Innendurchmesser des Verbindungsstücks (1) kleiner ist als ein Aussendurchmesser der Düse (3).

3. Giessmaschine nach einem der vorangehenden Ansprüche, **dadurch gekennzeichnet, dass** ein Innenzylinder des Hohlzylinders einen konischen Bereich (6) an dem Ende mit der Befestigungsvorrichtung (4) des Verbindungsstücks (1) aufweist.

4. Giessmaschine nach einem der vorangehenden Ansprüche, **dadurch gekennzeichnet, dass** das Verbindungsstück (1) eine Fläche (7) und/oder eine Nut (8) zur Aufnahme einer Flanschfläche eines Flansches (5) der Düse (3) aufweist und/oder dass eine radiale und/oder axiale Fläche des Verbindungsstücks (1) mit der Düse (3) verbindbar ist.

5. Giessmaschine nach einem der vorangehenden Ansprüche, **dadurch gekennzeichnet, dass** eine Aussenfläche des Verbindungsstücks (1) eine Montagevorrichtung (9), insbesondere eine Schlüsselweite oder ein Rändel aufweist.

6. Giessmaschine nach einem der vorangehenden Ansprüche, **dadurch gekennzeichnet, dass** die Düse (3) vertieft im Verbindungsstück (1) anordbar ist.

7. Giessmaschine nach einem der vorangehenden Ansprüche, **dadurch gekennzeichnet, dass** das Verbindungsstück (1) an beiden Enden eine Befestigungsvorrichtung (4), insbesondere ein Gewinde, aufweist.

8. Giessmaschine nach einem der vorangehenden Ansprüche, **dadurch gekennzeichnet, dass** das Verbindungsstück (1) aus Metall, insbesondere einem nichtrostenden Stahl oder Edelstahl, oder aus Aluminium oder aus Kunststoff, insbesondere POM 6, besteht.

9. Giessmaschine nach einem der vorangehenden Ansprüche, **dadurch gekennzeichnet, dass** das Verbindungsstück (1) mit der Düse (3) und/oder der Klemmeinheit (2) verbindbar, insbesondere verschweissbar, ist.

10. Giessmaschine nach einem der vorangehenden Ansprüche, **dadurch gekennzeichnet, dass** eine Hülse (10) in dem Verbindungsstück (1) anordbar ist.

11. Giessmaschine nach einem der vorangehenden Ansprüche, **dadurch gekennzeichnet, dass** wenigstens ein Sicherungselement (11) in dem Verbindungsstück (1) und der Klemmeinheit (2) angeordnet ist.

12. Giessmaschine nach einem der Ansprüche 1-11, wobei das Verbindungsstück (1) an beiden Enden eine Befestigungsvorrichtung (4), insbesondere ein Gewinde, aufweist, wobei die Düse mit einer Klemmeinheit (2) am Verbindungsstück befestigbar ist, welche wie eine Überwurfmutter ausgebildet ist.

13. Giessmaschine nach einem der Ansprüche 1-12, wobei die Klemmeinheit und ein Sitz der Klemmeinheit an dem Verbindungsstück so ausgeführt sind, dass für einen Austausch der Düse die Düse und/oder die Klemmeinheit zu zerstören sind, also die Düse und/oder die Klemmeinheit nicht zerstörungsfrei entfernbar sind.

14. Verwendung eines Verbindungsstücks (1), einer Klemmeinheit (2) und einer Düse (3) in einer Giessmaschine,
wobei das Verbindungsstück (1), das bevorzugt eine Hohlzylinderform hat, an einem ersten Ende eine Befestigungsvorrichtung (4) in Form eines Gewinde aufweist, und die Klemmeinheit (2) mit dem zweiten Ende des Verbindungsstücks (1) verbindbar ist, wobei das Verbindungsstück (1) und/oder die Klemmeinheit (2) eine Aufnahme für die Düse (3) aufweist und die Düse (3) mit dem Verbindungsstück (1) verbindbar und in oder an dem Verbindungsstück haltbar ist.

## Claims

1. Casting machine having a connection piece (1), in particular suitable for fastening an elastic nozzle (3) in a casting machine, having a clamping unit (2) and having a nozzle (3), wherein the connection piece (1), which preferably has a hollow cylindrical form, has a fastening device (4) in the form of a thread at a first end, and the clamping unit (2) can be connected to the second end of the connection piece (1), wherein the connection piece (1) and/or the clamping unit (2) have/has a holder for the nozzle (3) and the nozzle (3) can be connected to the connection piece (1) and can be held in or on the connection piece.

2. Casting machine according to Claim 1, **characterized in that** an inside diameter of the connection piece (1) is smaller than an outside diameter of the nozzle (3).

3. Casting machine according to either of the preceding claims, **characterized in that** an internal cylinder of the hollow cylinder has a conical region (6) at the end having the fastening device (4) of the connection piece (1).

4. Casting machine according to one of the preceding claims, **characterized in that** the connection piece (1) has a surface (7) and/or a groove (8) for holding a flange surface of a flange (5) of the nozzle (3) and/or **in that** a radial and/or axial surface of the connection piece (1) can be connected to the nozzle (3).

5. Casting machine according to one of the preceding claims, **characterized in that** an outer surface of the connection piece (1) has a mounting device (9), in particular a width across flats or a knurl.

6. Casting machine according to one of the preceding claims, **characterized in that** the nozzle (3) can be arranged in a recessed manner in the connection piece (1).

7. Casting machine according to one of the preceding claims, **characterized in that** the connection piece (1) has a fastening device (4), in particular a thread, at both ends.

8. Casting machine according to one of the preceding claims, **characterized in that** the connection piece (1) consists of metal, in particular corrosion-resistant steel or stainless steel, or of aluminum or of plastic, in particular POM 6.

9. Casting machine according to one of the preceding claims, **characterized in that** the connection piece (1) can be connected, in particular welded, to the nozzle (3) and/or the clamping unit (2).

10. Casting machine according to one of the preceding claims, **characterized in that** a sleeve (10) can be arranged in the connection piece (1).

11. Casting machine according to one of the preceding claims, **characterized in that** at least one securing element (11) is arranged in the connection piece (1) and the clamping unit (2).

12. Casting machine according to one of Claims 1-11, wherein the connection piece has a fastening device (4), in particular a thread, at both ends, wherein the nozzle is fastenable to the connection piece by way of a clamping unit (2) which is formed as a union nut.

13. Casting machine according to one of Claims 1-12, wherein the clamping unit and a seat of the clamping unit on the connection piece are embodied such that, in order to replace the nozzle, the nozzle and/or the clamping unit have to be destroyed, that is to say the nozzle and/or the clamping unit cannot be removed without being destroyed.

14. Use of a connection piece (1), a clamping unit (2) and a nozzle (3) in a casting machine, wherein the connection piece (1), which preferably has a hollow cylindrical form, has a fastening device (4) in the form of a thread at a first end, and the clamping unit (2) can be connected to the second end of the connection piece (1), wherein the connection piece (1) and/or the clamping unit (2) have/has a holder for the nozzle (3) and the nozzle (3) can be connected to the connection piece (1) and can be held in or on the connection piece.

## Revendications

1. Machine de coulée comprenant une pièce de liaison (1), notamment apte à fixer une buse élastique (3) dans une machine de coulée, une unité de serrage (2) et une buse (3),
la pièce de liaison (1), qui présente de préférence une forme cylindrique creuse, présentant à une première extrémité un dispositif de fixation (4) en forme de filetage et l'unité de serrage (2) pouvant être connectée à la deuxième extrémité de la pièce de liaison (1), la pièce de liaison (1) et/ou l'unité de serrage (2) présentant un logement pour la buse (3) et la buse (3) pouvant être connectée à la pièce de liaison (1) et pouvant être retenue dans ou sur la pièce de liaison.

2. Machine de coulée selon la revendication 1, **caractérisée en ce qu'**un diamètre intérieur de la pièce de liaison (1) est inférieur à un diamètre extérieur de la buse (3).

3. Machine de coulée selon l'une quelconque des revendications précédentes, **caractérisée en ce qu'**un cylindre intérieur du cylindre creux présente une région conique (6) à l'extrémité comprenant le dispositif de fixation (4) de la pièce de liaison (1).

4. Machine de coulée selon l'une quelconque des revendications précédentes, **caractérisée en ce que** la pièce de liaison (1) présente une surface (7) et/ou une rainure (8) pour recevoir une surface de bride d'une bride (5) de la buse (3) et/ou **en ce qu'**une surface radiale et/ou axiale de la pièce de liaison (1) peut être connectée à la buse (3).

5. Machine de coulée selon l'une quelconque des revendications précédentes, **caractérisée en ce qu'**une surface extérieure de la pièce de liaison (1) présente un dispositif de montage (9), en particulier un plat pour clé ou un moletage.

6. Machine de coulée selon l'une quelconque des revendications précédentes, **caractérisée en ce que** la buse (3) peut être disposée de manière renfoncée dans la pièce de liaison (1).

7. Machine de coulée selon l'une quelconque des revendications précédentes, **caractérisée en ce que** la pièce de liaison (1) présente aux deux extrémités un dispositif de fixation (4), en particulier un filetage.

8. Machine de coulée selon l'une quelconque des revendications précédentes, **caractérisée en ce que** la pièce de liaison (1) se compose de métal, en particulier d'un acier inoxydable ou d'un acier spécial, ou d'aluminium ou de plastique, en particulier de POM 6.

9. Machine de coulée selon l'une quelconque des revendications précédentes, **caractérisée en ce que** la pièce de liaison (1) peut être connectée à la buse (3) et/ou à l'unité de serrage (2), en particulier par soudage.

10. Machine de coulée selon l'une quelconque des revendications précédentes, **caractérisée en ce qu'**une douille (10) peut être disposée dans la pièce de liaison (1).

11. Machine de coulée selon l'une quelconque des revendications précédentes, **caractérisée en ce qu'**au moins un élément de fixation (11) est disposé dans la pièce de liaison (1) et dans l'unité de serrage (2).

12. Machine de coulée selon l'une quelconque des revendications 1 à 11, dans laquelle la pièce de coulée (1) présente aux deux extrémités un dispositif de fixation (4), en particulier un filetage, la buse pouvant être fixée avec une unité de serrage (2) à la pièce de liaison, qui est réalisée sous forme d'écrou d'accouplement.

13. Machine de coulée selon l'une quelconque des revendications 1 à 12, dans laquelle l'unité de serrage et un siège de l'unité de serrage sont réalisés sur la pièce de liaison de telle sorte que pour un remplacement de la buse, la buse et/ou l'unité de serrage doivent être détruites, c'est-à-dire que la buse et/ou l'unité de serrage ne peuvent pas être enlevées sans destruction.

14. Utilisation d'une pièce de liaison (1), d'une unité de serrage (2) et d'une buse (3) dans une machine de coulée,
la pièce de liaison (1), qui présente de préférence une forme cylindrique creuse, présentant, au niveau d'une première extrémité, un dispositif de fixation (4) sous forme de filetage et l'unité de serrage (2) pouvant être connectée à la deuxième extrémité de la pièce de liaison (1), la pièce de liaison (1) et/ou l'unité de serrage (2) présentant un logement pour la buse (3) et la buse (3) pouvant être connectée à la pièce de liaison (1) et pouvant être retenue dans ou sur la pièce de liaison.
